Europäisches Patentamt

European Patent Office

Office européen des brevets

(19)

(11) **EP 1 262 845 A1**

(12) **EUROPÄISCHE PATENTANMELDUNG**

(43) Veröffentlichungstag:
**04.12.2002 Patentblatt 2002/49**

(51) Int Cl.⁷: $G05B\ 19/416$

(21) Anmeldenummer: **02005908.5**

(22) Anmeldetag: **14.03.2002**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: **15.03.2001 DE 10112582**

(71) Anmelder: **SIEMENS AKTIENGESELLSCHAFT
80333 München (DE)**

(72) Erfinder:
• **Rottmann, Norbert
76829 Landau (DE)**
• **Vierthaler, Christian
8047 Zürich (CH)**

(54) **Verfahren und Vorrichtung zum gesteuerten Positionieren eines mittels einem drehzahlveränderbar angesteuerten Antriebs verfahrbaren Verfahrelements**

(57) Die Erfindung betrifft ein Verfahren und eine Vorrichtung zum gesteuerten Positionieren eines mittels eines drehzahlveränderbar angesteuerten Antriebs verfahrbaren Verfahrelements (3) auf einen vorbestimmten Zielpunkt (ZP). Erfindungsgemäß wird der Bremseinsatzpunkt (BEP) für das Verfahrelement (3) in Abhängigkeit von einer individuell vorgebbaren Soll-Verfahrgeschwindigkeit ($V_{soll}$) festgelegt.

FIG 2

EP 1 262 845 A1

**Beschreibung**

Technisches Gebiet

Die Erfindung betrifft ein Verfahren zum gesteuerten Positionieren eines mittels einem drehzahlveränderbar angesteuerten Antriebs verfahrbaren Verfahrelements an einen vorbestimmten Zielpunkt. Des Weiteren betrifft die Erfindung eine Positioniervorrichtung mit einem mittels einem drehzahlveränderbar angesteuerten Antriebs verfahrbaren Verfahrelement und einer auf den Antrieb für das Verfahrelement einwirkenden Steuereinrichtung.

Aufgrund der systembedingten Toleranzen der einzelnen Maschinenkomponenten treten beim Verfahren von Verfahrelemente Probleme in der Positioniergenauigkeit und Positioniergeschwindigkeit auf. Beispielhaft sei hier als Verfahrelement ein Bearbeitungswerkzeug genannt, das beispielsweise mittels eines Spindeltriebs in und aus einer Bearbeitungsposition verfahrbar ist. Derartige Werkzeuge sind beispielsweise Fräser, Bohrer etc., die in einer Durchlaufbearbeitungsmaschine, wie sie insbesondere bei der Bearbeitung von Holzplatten oder dergleichen zum Einsatz kommen, hintereinander angeordnet sind. So müssen die einzelnen Bearbeitungswerkzeuge sehr schnell und mit hoher Positioniergenauigkeit an einen vorbestimmten Zielpunkt verfahren werden. Der Verfahrweg kann dabei entlang einer Linear- oder Rundachse verlaufen.

Allgemein unterscheidet man zwischen gesteuertem und geregeltem Positionieren. Beim gesteuerten Positionieren wird eine Zielposition bzw. ein Zielpunkt vorgegeben und die Achse in die Zielposition gebracht. Die Genauigkeit ist beim gesteuerten Positionieren abhängig von den vorausberechneten Schaltpunkten für den angesteuerten Antrieb. Im Gegensatz zum geregelten Positionieren erfolgt keine zyklische bzw. kontinuierliche Nachführung des Lage-Istwertes auf den Lage-Sollwert.

Im vorliegenden Fall ist das gesteuerte Positionieren eines drehzahlveränderbar angesteuerten Antriebs von Interesse, d. h. das Erreichen der Soll- oder Zielposition bzw. des vorbestimmten Zielpunktes ist nur abhängig von der Geschwindigkeit an einem sogenannte Abschaltpunkt und der Reproduzierbarkeit, mit der der Abschaltpunkt erkannt wird. Der Abschaltpunkt selbst ist eine Maschinenkonstante. Die Differenz von Zielund Abschaltpunkt beschreibt, wie viel Weg der Antrieb nach dem Abschalten bis zum Stillstand noch zurücklegt. Von weiterem Interesse für das gesteuerte Positionieren ist der sogenannte Bremseinsatzpunkt. Dieser muss so projektiert werden, dass der Antrieb am Abschaltpunkt mit Schleichgeschwindigkeit verfährt. Die Wegdifferenz aus Bremseinsatzpunkt und Abschaltpunkt sollte genauso groß sein wie der Antrieb tatsächlich benötigt, um auf Schleichgeschwindigkeit zu verzögern. Des Weiteren ist der Umschaltpunkt wichtig. Der Umschaltpunkt ist wie der Abschaltpunkt eine Maschinenkonstante und nicht abhängig von der zu verfahrenden Geschwindigkeit. Die Differenz aus Umschaltpunkt und Abschaltpunkt ist somit im Wesentlichen eine Maschinenkonstante und abhängig von der erreichten Geschwindigkeit, aus der abgebremst wird, und der Trägheit des Antriebs.

Stand der Technik

Beim Stand der Technik wird der Bremseinsatzpunkt als Wegdifferenz zum Ziel projektiert. Zur Projektierung wird hierbei die vom Antrieb maximal erreichbare Verfahrgeschwindigkeit, die Bauart bedingt vorgegeben ist, herangezogen. Falls diese maximal zu verfahrende Geschwindigkeit nicht erreicht wird, entweder weil die zu verfahrende Wegstrecke zu klein ist, oder weil die gewünschte Verfahrgeschwindigkeit kleiner ist als die maximale Verfahrgeschwindigkeit, wird bei dieser Art der Positionierung zu früh begonnen zu verzögern. Der Antrieb benötigt aber in diesem Fall tatsächlich eine kürzere Wegstrecke um auf Schleichgeschwindigkeit zu verzögern als gemäß der Projektierung veranschlagt werden musste.

Damit dauert aber der Positioniervorgang unnötig lang. Dies ist gerade bei zeitkritischen Positioniervorgängen nicht akzeptabel, da sich hierdurch in aufeinander abgestimmten Positioniervorgängen mehrerer Verfahrelemente unter Umständen sehr hohe Positionierzeiten ergeben, da die einzelnen Verfahrelemente unnötig lang mit Schleichgeschwindigkeit verfahren werden.

Darstellung der Erfindung

Das der Erfindung zugrundeliegende technische Problem besteht darin, einen zeitoptimierteren gesteuerten Positioniervorgang sowie eine entsprechend arbeitende Positioniervorrichtung bereit zu stellen.

Dieses technische Problem wird durch ein Verfahren mit den Merkmalen des Anspruchs 1 sowie durch eine Positioniervorrichtung mit den Merkmalen des Anspruchs 7 gelöst. Der Erfindung liegt der Gedanke zugrunde, erstmals den Bremseinsatzpunkt nicht für alle Positioniervorgänge in Abhängigkeit von der maximal vom Antrieb zu erreichenden Verfahrgeschwindigkeit als Wegdifferenz zum Ziel zu projektieren, sondern diesen in Abhängigkeit von einer individuell an den jeweiligen Positioniervorgang angepassten vorgebbaren Soll-Verfahrgeschwindigkeit von Fahrt zu Fahrt neu zu errechnen. Somit wird eine zeitoptimierte gesteuerte Positionierung erzielt, falls aus den eingangs beispielhaft genannten Gründen die maximale Verfahrgeschwindigkeit nicht erreicht werden kann. Der Bremseinsatzpunkt ist somit keine für alle Positioniervorgänge gleiche, feste vorgegebene Größe mehr, sondern wird an die tatsächlichen Gegebenheiten für jeden Verfahrvorgang angepasst in Achsenrichtung versetzt.

Beispielsweise wandert der Bremseinsatzpunkt bei einer vorgegebenen Soll-Verfahrgeschwindigkeit, die niedriger ist als die vom Antrieb erreichbare maximale Verfahrgeschwindigkeit, näher zum Zielpunkt hin. Dadurch wird die Phase, in der mit Schleichgeschwindigkeit verfahren wird, auf die minimale, technisch vorgegebene Wegstrecke, die sogenannte Umschaltdifferenz, minimiert. Mit Umschaltdifferenz ist der Abstand zwischen dem Zielpunkt und dem Umschaltpunkt gemeint. Der Umschaltpunkt ist dabei derjenige Achsenpunkt, ab dem der Antrieb mit Schleichgeschwindigkeit in Vorwärtsrichtung angesteuert wird. Bis aber tatsächlich Schleichgeschwindigkeit erreicht ist, verstreicht aufgrund der Trägheit des Antriebs noch eine gewisse Zeitspanne, wobei aber zumindest spätestens am Abschaltpunkt die Schleichgeschwindigkeit erzielt ist. Erstmals wird also erfindungsgemäß der Bremseinsatzpunkt für das Verfahrelement in Abhängigkeit von einer individuell vorgebbaren Soll-Verfahrgeschwindigkeit festgelegt und nicht als fester Punkt vor dem Zielpunkt definiert.

Insbesondere ist also der Bremseinsatzpunkt in Abhängigkeit von der vorgegeben Soll-Verfahrgeschwindigkeit festzulegen, in dem von der Zielkoordinate des Zielpunkts die Umschaltdifferenz und der Verzögerungsweg abgezogen werden, wobei die Umschaltdifferenz durch die maschinentechnischen Gegebenheiten vorgegeben ist und der Bremsverzögerungsweg sich in Abhängigkeit von der vorgegebenen Soll-Verfahrgeschwindigkeit errechnet, indem die Soll-Verfahrgeschwindigkeit im Quadrat minus die maschinentechnisch vorgegebene Schleichgeschwindigkeit im Quadrat durch die maximal mögliche Bremsverzögerung geteilt wird. Selbstverständlich ist es möglich, in eine Steuerungseinrichtung die Werte für die Umschaltdifferenz, die Schleichgeschwindigkeit und die Bremsverzögerung einzugeben.

Beim Positionieren mit Analogausgang erfolgt die Ansteuerung des drehzahlveränderbar ansteuerbaren Antriebs über einen vorzugsweise fest zugeordneten Analogausgang mit einer Spannung zwischen beispielsweise +/- 10 Volt bzw. einem Strom von beispielsweise +/- 20 mA. Damit können beispielsweise Servomotoren über ein Leistungsteil (Simodrive) oder Drehstrommotoren über Frequenzumrichter (Micromaster) angeschlossen werden. Zur Wegerfassung verwendet man vorzugsweise Inkrementalgeber mit zwei um 90 Grad versetzten Spuren. Es ist auch möglich, zum Freischalten und Abschalten eines Leistungsteils oder zum Ansteuern einer Bremse einen Digitalausgang zu verwenden.

Im vorliegenden Fall ist es zweckmäßig, den Bremseinsatzpunkt, den Umschaltpunkt und den Abschaltpunkt für jedes anzufahrende Ziel über die Werte Umschaltdifferenz und Abschaltdifferenz festzulegen. Es ist hier vorzugsweise möglich, die Umschaltdifferenz und auch die Abschaltdifferenz für die Fahrtrichtung vorwärts und die Fahrtrichtung rückwärts unterschiedlich festzulegen.

Eine erfindungsgemäße Positioniervorrichtung umfasst ein mittels eines drehzahlveränderbar angesteuerten Antriebs verfahrbaren Verfahrelement und eine auf den Antrieb für das Verfahrelement einwirkende Steuereinrichtung. Die Steuereinrichtung legt den Bremseinsatzpunkt für das Verfahrelement in Abhängigkeit von der erstmals individuell vorgebbaren Soll-Verfahrgeschwindigkeit fest. Insbesondere ist somit für jeden tatsächlich erfolgenden Positionier- bzw. Verfahrvorgang individuell die zu erreichende Soll-Verfahrgeschwindigkeit vorgebbar und damit wird der Bremseinsatzpunkt individuell an die jeweiligen Einsatzbedingungen angepasst.

Durch diese Maßnahme wird die Zeitspanne vom Bremsbeginn bis zum Erreichen des Zielpunkts minimiert, wodurch die einzelnen Positioniervorgänge schneller aufeinanderfolgend durchgeführt werden können, was die Effektivität bei beispielsweise einer Durchlaufbearbeitungsmaschine mit vielen derartig zu positionierenden Verfahrelementen, auf denen Berabeitungswerkzeuge angeordnet sind, gesteigert werden kann.

In einer bevorzugten Ausführungsform der Erfindung wird zudem überprüft, ob die vorgegebene Soll-Verfahrgeschwindigkeit mit der tatsächlich erreichten Verfahrgeschwindigkeit übereinstimmt. Ist dies nicht der Fall, so wird der Bremseinsatzpunkt auf der Grundlage der tatsächlich erreichten Verfahrgeschwindigkeit neu errechnet. Vorzugsweise wird die tatsächlich erreichte maximale Verfahrgeschwindigkeit über den Antrieb erfasst. Es ist selbstverständlich aber auch möglich, eine separate Einrichtung zum Erfassen dieser maximalen Verfahrgeschwindigkeit vorzusehen, die ihre Daten dann an die Steuereinrichtung übermittelt.

Die Steuereinrichtung ist vorzugsweise eine programmierbare Steuerung (SPS) oder CPU, die mit den maschinenabhängigen Daten programmierbar ist, d.h. der Umschaltdifferenz, der Schleichgeschwindigkeit und der Bremsverzögerung.

Typische Motoren für ein Verfahrelement sind Drehstrommotoren an Frequenzumrichter oder Servomotoren an Umrichter.

Als erforderliches Wegmess-System kommt vorzugsweise ein Inkrementalgeber mit zwei um 90 Grad versetzten Spuren zum Einsatz, der optional eine Nullmarkenspur unterstützt. Insbesondere ist ein 24 V asymmetrischer Inkrementalgeber geeignet. Ferner ist es insbesondere auch vorteilhaft, Fehlimpulse (Nullmarke), Ausfall eines Leistungsteils, den Verfahrbereich, den Arbeitsbereich über Software-Endschalter, den Istwert, den Zieleinlauf und den Zielbereich zu überwachen.

Kurze Beschreibung der Zeichnungen

Im Folgenden ist zur weiteren Erläuterung und zum besseren Verständnis ein Ausführungsbeispiel der Erfindung unter Bezugnahme auf die beigefügten Zeichnungen näher beschrieben. Es zeigt:

Fig. 1 eine schematische Übersicht über Komponenten für das gesteuerte Positionieren zur Durchführung eines erfindungsgemäßen Positionierverfahrens,

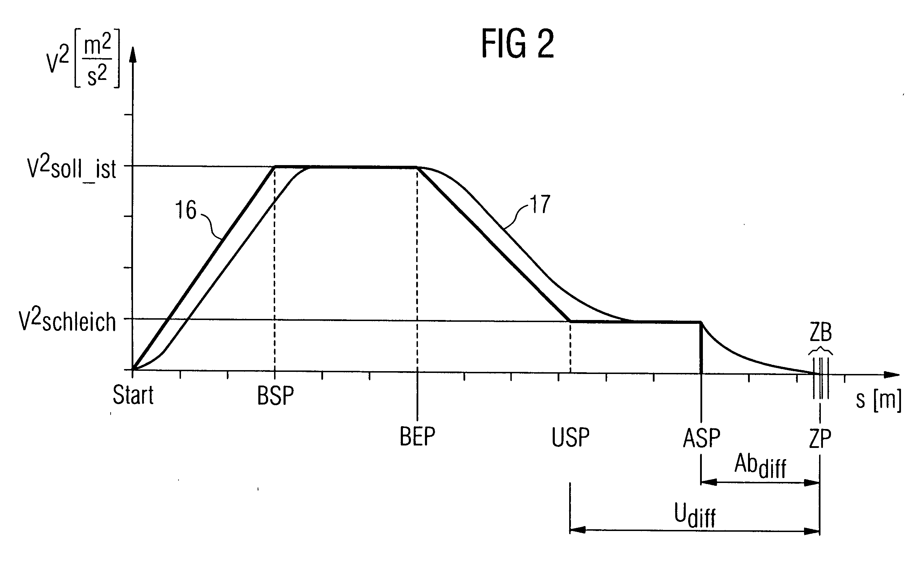

Fig. 2 ein Geschwindigkeits-Weg-Diagramm mit darin aufgezeichnetem Geschwindigkeitszeitverlauf gemäß einem Signal an einem Analogausgang und einem reellen Geschwindigkeitsverlauf.

Beschreibung einer bevorzugten Ausführungsform der Erfindung

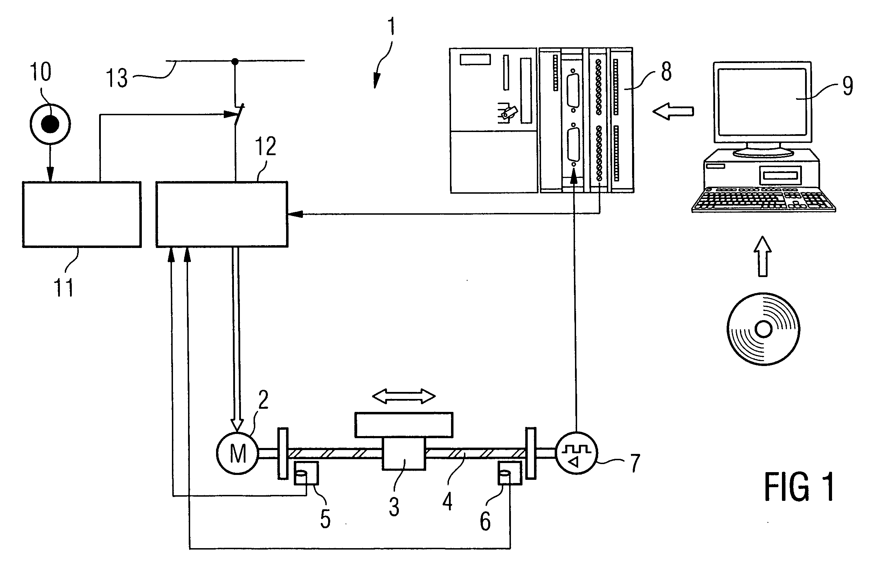

Bezugnehmend auf die Fig. 1 wird der grundsätzliche Aufbau einer erfindungsgemäßen Positioniervorrichtung 1 erläutert. Die Positioniervorrichtung 1 umfasst einen Antrieb 2, der über ein Leistungsteil 12, das an ein Netz 13 angeschlossen ist, mit Strom versorgt. Es ist hier noch anzumerken, dass bei der gezeigten Ausführungsform eine Sicherheitseinrichtung 11, die mit einem Notausschalter 10 verbunden ist, der Strom zum Leistungsteil 12 unterbrochen werden kann.

Der Motor 2 treibt eine Spindel 4 an, auf der eine Spindelmutter 3 sitzt, die ein hier nicht näher dargestelltes Werkzeug oder allgemein ein Verfahrelement 3 trägt. An den zwei Endbereichen der Spindel 4 sind Hardware-Endschalter 5 und 6 montiert, um als definierte Endanschläge zu dienen. Mit der Spindel 4 ist ein Weggeber 7 gekoppelt, der wiederum mit einer CPU 8 verbunden ist. Die CPU 8 kann über einen PC oder eine andere Eingabeeinheit 9 programmiert werden.

Die CPU 8 ist wiederum auch mit dem Leistungsteil 12 gekoppelt und steuert dieses.

Im folgenden wird das Positionieren des Verfahrelements 3 an einem vorbestimmten Zielpunkt mittels der genannten Bauteile beschrieben. So werden über den PC folgende Werte eingegeben: $v_{soll}$, Beschleunigung $a_b$, Verzögerung $a_v$, die Umschaltdifferenz, die Abschaltdifferenz. Die Geschwindigkeit $v_{soll}$ ist die Geschwindigkeit mit der die Achse verfahren werden soll. Die Beschleunigung ist abhängig von den maschinentechnischen Gegebenheiten, gleiches gilt für die Verzögerung. Die Umschaltdifferenz vorwärts definiert den Umschaltpunkt, ab dem der Antrieb mit Schleichgeschwindigkeit in Vorwärtsrichtung angesteuert wird. Die Schleichgeschwindigkeit ist wiederum maschinentechnisch vorgegeben. Die Abschaltdifferenz vorwärts definiert den Abschaltpunkt, an dem der Antrieb in Vorwärtsrichtung abgeschaltet wird. Gleiches gilt in entsprechender Weise für die Abschaltdifferenz rückwärts und die Umschaltdifferenz rückwärts.

Es ist hierzu noch anzumerken, dass die Umschaltdifferenz größer sein muss als die Abschaltdifferenz. Die Abschaltdifferenz ist zweckmäßigerweise größer als der halbe Zielbereich. Der Abstand zwischen dem Umschaltpunkt und dem Abschaltpunkt muss so groß gewählt werden, dass der Antrieb tatsächlich auf Schleichgeschwindigkeit verzögern kann. Der Abstand zwischen Abschaltpunkt und Ziel muss so gewählt werden, dass der Antrieb innerhalb des Zielbereichs zum Stillstand kommt. Das zu verfahrende Wegstück muss mindestens so groß sein wie die Abschaltdifferenz.

Schließlich ist noch anzumerken, dass der Zielbereich ein vorbestimmter Bereich um den zuvor festgelegten Zielpunkt ist.

Nachdem diese Eingaben erfolgt sind, wird der Motor 2 über die CPU 8 gesteuert, so dass das Verfahrelement 3 mit der Beschleunigung $a_b$ bis auf die individuell vorgegebene Geschwindigkeit $v_{soll}$ beschleunigt wird. Es wird dann solange das Verfahrelement 3 mit der Geschwindigkeit $v_{soll}$ verfahren, bis der gemäß nachfolgend gezeigter Formel errechnete Bremseinsatzpunkt BEP erreicht wird.

$$BEP = ZP - U_{diff} - \frac{v_{soll}^{\,2} - v_{schleich}^{\,2}}{2a_v},$$

wobei

BEP = Bremseinsatzpunkt [m],
ZP = Zielpunkt [m],
$U_{diff}$ = Umschaltdifferenz [m],
$v_{soll}$ = individuell vorgebbare Soll-Verfahrgeschwindigkeit [m/s],
$v_{schleich}$ = Schleichgeschwindigkeit [m/s],
$a_v$ = Bremsverzögerung [m/s$^2$]

Am Bremseinsatzpunkt BEP wird das Verfahrelement 3 mit der vorgegebenen Verzögerung $a_v$ solange abgebremst, bis der Geschwindigkeitssollwert gleich der Schleichgeschwindigkeit ist. Anschließend wird am Abschaltpunkt ASP der Antrieb abgeschaltet. Durch die vorausberechneten Koordinaten für den Abschaltpunkt, den Umschaltpunkt und den Bremseinsatzpunkt wird der Zielpunkt ZP erreicht. Minimale Abweichungen vom Zielpunkt ZP innerhalb des Zielbereiches ZB werden toleriert. Ist der Zielbereich ZB erreicht, so wird ein Signal ausgegeben, mit dem der Steuereinrichtung 8 mitgeteilt wird, dass das Ziel erreicht ist, woraufhin weitere Vorgänge gestartet werden können.

Bei einer besonderen Ausführungsform der Erfindung wird die tatsächlich erreichte Verfahrgeschwindigkeit gemessen, und falls eine Abweichung zur vorgegebenen Soll-Verfahrgeschwindigkeit $v_{soll}$ festgestellt wird, also beispielsweise nur auf einen niedrigere Geschwindigkeit beschleunigt werden konnte, wird der Bremseinsatzpunkt gemäß nachfolgender Formel

$$BEP = ZP - U_{diff} - \frac{v_{ist}^{\,2} - v_{schleich}^{\,2}}{2a_v}$$

neu berechnet. Der Umschaltpunkt USP und der Abschaltpunkt ASP bleiben, da sie ja maschinentechnisch vorgegeben sind, unverändert. Durch die neue Berechnung des Bremseinsatzpunkts gemäß obiger Formel wird auch in dem Fall, dass die Geschwindigkeit $v_{ist}$ geringer ist als die vorgegebene Geschwindigkeit $v_{soll}$ eine nochmals zeitoptimiertere Positionierung gegenüber dem Stand der Technik erreicht, ohne dass die Positioniergenauigkeit leidet.

Es ist damit herauszustellen, dass gegenüber dem Stand der Technik der Zielpunkt schneller erreicht wird als bei heute üblichen Positionierverfahren. Dabei ist die Positioniergenauigkeit gemäß dem erfindungsgemäßen Verfahren mit der nach dem Stand der Technik identisch.

**Patentansprüche**

1.  Verfahren zum gesteuerten Positionieren eines mittels eines drehzahlveränderbar angesteuerten Antriebs angetriebenen Verfahrelements (3) an einen vorbestimmten Zielpunkt (ZP), bei dem eine für jeden Positioniervorgang individuell anpassbare Soll-Verfahrgeschwindigkeit ($v_{soll}$) vorgegeben wird und der Bremseinsatzpunkt (BEP) für das Verfahrelement (3) in Abhängigkeit von dieser individuell vorgegebenen Soll-Verfahrgeschwindigkeit ($v_{soll}$) festgelegt wird.

2.  Verfahren nach Anspruch 1, **dadurch gekennzeichnet, dass** der Bremseinsatzpunkt (BEP) gemäß nachfolgender Gleichung in Abhängigkeit von vorgegebenen Verfahrgeschwindigkeit ($v_{soll}$) festgelegt wird:

$$BEP = ZP - U_{diff} - \frac{v_{soll}^2 - v_{schleich}^2}{2a_v},$$

wobei

BEP = Bremseinsatzpunkt [m],
ZP = Zielpunkt [m],
$U_{diff}$ = Umschaltdifferenz [m],
$v_{soll}$ = individuell vorgebbare Soll-Verfahrgeschwindigkeit [m/s],
$v_{schleich}$ = Schleichgeschwindigkeit [m/s],
$a_v$ = Bremsverzögerung [m/s$^2$]

von denen die $U_{diff}$, $v_{schleich}$ und $a_v$ antriebsbedingte vorgegebene Größen sind.

3.  Verfahren nach Anspruch 1 oder 2, **dadurch gekennzeichnet, dass** die vorgegebene Soll-Verfahrgeschwindigkeit ($v_{soll}$) durch die tatsächlich erreichte maximale Verfahrgeschwindigkeit ($v_{ist}$) ersetzt wird, wenn diese weit voneinander abweichen.

4.  Verfahren nach einem der voranstehenden Ansprüche, **dadurch gekennzeichnet, dass** die Umschaltdifferenz je nach Fahrtrichtung unterschiedlich festgelegt wird.

5.  Verfahren nach Anspruch 1, 2 oder 3, **dadurch gekennzeichnet, dass** eine Abschaltdifferenz je nach Fahrtrichtung des Verfahrelements (3) unterschiedlich festgelegt wird.

6.  Verfahren nach einem oder mehreren der voranstehenden Ansprüche, **dadurch gekennzeichnet, dass** dieses als Steuerprogramm in einer speicherprogrammierbaren Steuerung (8) abgespeichert ist.

7.  Positioniervorrichtung mit einem mittels eines drehzahlveränderbar angesteuerten Antriebs verfahrbaren Verfahrelement (3) und einer auf den Antrieb (2) des Verfahrelements (3) einwirkenden Steuereinrichtung (8), die den Bremseinsatzpunkt (BEP) für das Verfahrelement (3) in Abhängigkeit von einer individuell vorgebbaren Soll-Verfahrgeschwindigkeit ($v_{soll}$) festlegt.

8.  Positioniervorrichtung nach Anspruch 7, **dadurch gekennzeichnet, dass** sich der Bremseinsatzpunkt (BEP) gemäß nachfolgender Gleichung in Abhängigkeit von der vorgebbaren Soll-Verfahrgeschwindigkeit ($v_{soll}$) errechnet:

$$BEP = ZP - U_{diff} - \frac{v_{soll}^2 - v_{schleich}^2}{2a_v},$$

wobei

BEP = Bremseinsatzpunkt [m],
ZP = Zielpunkt [m],
$U_{diff}$ = Umschaltdifferenz [m],
$v_{soll}$ = individuell vorgebbare Soll-Verfahrgeschwindigkeit [m/s],
$v_{schleich}$ = Schleichgeschwindigkeit [m/s],
$a_v$ = Bremsverzögerung [m/s$^2$]

von denen die $U_{diff}$, $v_{schleich}$ und a antriebsbedingte vorgegebene Größen sind.

9.  Positioniervorrichtung nach Anspruch 7 oder 8, **dadurch gekennzeichnet, dass** die Umschaltdifferenz je nach Fahrtrichtung unterschiedlich vorgegeben ist.

10. Positioniervorrichtung nach Anspruch 7 oder 8, **dadurch gekennzeichnet, dass** eine Abschaltdifferenz je nach Fahrtrichtung des Verfahrelements (3) unterschiedlich vorgegeben ist.

11. Positioniervorrichtung nach einem oder mehreren der Ansprüche 7-10, **dadurch gekennzeichnet, dass** eine Einrichtung (7) vorhanden ist, mit der die tatsächliche maximale Verfahrgeschwindigkeit ($v_{ist}$) des Verfahrelements (3) ermittelbar ist.

12. Positioniervorrichtung nach einem oder mehreren der Ansprüche 7-11, **dadurch gekennzeichnet, dass** die Steuereinrichtung eine speicherprogrammierbare Steuerung ist.

FIG 1

FIG 2

EP 1 262 845 A1

EP 1 262 845 A1

| Europäisches Patentamt | EUROPÄISCHER RECHERCHENBERICHT | Nummer der Anmeldung EP 02 00 5908 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 4 081 732 A (AOYAMA TADAMASA) 28. März 1978 (1978-03-28) <br> * Spalte 2, Zeile 22 - Zeile 35 * <br> * Spalte 5, Zeile 6 - Zeile 31 * <br> * Ansprüche 1-9 * <br> * Abbildung 1 * | 1,7,9-11 | G05B19/416 |
| X | DE 30 11 148 A (STEINBACH WOLFGANG DR ING) 1. Oktober 1981 (1981-10-01) <br> * Seite 5, Zeile 18 - Seite 6, Zeile 15 * <br> * Seite 7, Zeile 1 - Zeile 10 * <br> * Seite 7, Zeile 28 - Zeile 34 * <br> * Seite 8, Zeile 27 - Seite 10, Zeile 16 * <br> * Abbildungen 2,3 * <br> * Ansprüche 1-6 * | 1,2,7-11 | |
| A | DE 23 34 455 A (SIEMENS AG) 23. Januar 1975 (1975-01-23) <br> * das ganze Dokument * | 1-12 | |
| A | DE 30 38 873 A (ELEVATOR GMBH) 30. April 1981 (1981-04-30) <br> * das ganze Dokument * | 1-12 | RECHERCHIERTE SACHGEBIETE (Int.Cl.7) <br><br> G05B |

Der vorliegende Recherchenbericht wurde für alle Patentansprüche erstellt

| Recherchenort | Abschlußdatum der Recherche | Prüfer |
|---|---|---|
| MÜNCHEN | 11. Oktober 2002 | Pöllmann, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

9

**ANHANG ZUM EUROPÄISCHEN RECHERCHENBERICHT
ÜBER DIE EUROPÄISCHE PATENTANMELDUNG NR.**

EP 02 00 5908

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-10-2002

| Im Recherchenbericht angeführtes Patentdokument | | | Datum der Veröffentlichung | Mitglied(er) der Patentfamilie | | Datum der Veröffentlichung |
|---|---|---|---|---|---|---|
| US 4081732 | A | | 28-03-1978 | KEINE | | |
| DE 3011148 | A | | 01-10-1981 | DE | 3011148 A1 | 01-10-1981 |
| DE 2334455 | A | | 23-01-1975 | DE | 2334455 A1 | 23-01-1975 |
| | | | | JP | 50037987 A | 09-04-1975 |
| DE 3038873 | A | | 30-04-1981 | FI | 793228 A | 19-04-1981 |
| | | | | BR | 8006715 A | 22-04-1981 |
| | | | | DE | 3038873 A1 | 30-04-1981 |
| | | | | FR | 2467812 A1 | 30-04-1981 |
| | | | | GB | 2061559 A ,B | 13-05-1981 |
| | | | | SE | 451014 B | 24-08-1987 |
| | | | | SE | 8007272 A | 19-04-1981 |
| | | | | US | 4380049 A | 12-04-1983 |

EPO FORM P0461

Für nähere Einzelheiten zu diesem Anhang : siehe Amtsblatt des Europäischen Patentamts, Nr.12/82